# EUROPEAN PATENT APPLICATION

(11) **EP 4 738 242 A1**
(43) Date of publication of application: **06.05.2026**
(21) Application number: 24879906.6
(22) Date of filing: 05.08.2024
(51) Int. Cl.: G06T 5/00, G06T 7/00, G06V 10/776, G06V 10/74, G06T 7/90, G06T 7/11, G06N 3/0475

(54) **METHOD AND APPARATUS FOR PERFORMING VIDEO ENHANCEMENT**

(30) Priority: 19.10.2023 KR 20230140618
(71) Applicant: Samsung Electronics Co., Ltd., Suwon-si, Gyeonggi-do 16677 (KR)
(72) Inventor: RIM, Junho, Suwon-si, Gyeonggi-do 16677 (KR); SHIN, Jaewook, Suwon-si, Gyeonggi-do 16677 (KR); YEO, Haedong, Suwon-si, Gyeonggi-do 16677 (KR)
(74) Representative: Appleyard Lees IP LLP
(86) International application number: PCT/KR2024/011530
(87) International publication number: WO 2025/084566

(57) **Abstract**

Provided is a method and device for performing video enhancement. The method includes: identifying a first image from among a plurality of images included in a first video, wherein the first image includes an anomaly; obtaining guide information corresponding to the anomaly from among a plurality of types of guide information; obtaining a second image to replace the first image based on the guide information; and obtaining a second video in which the anomaly has been removed by using the second image.

## Description

### TECHNICAL FIELD

The disclosure relates to a method and device for performing video enhancement.

### BACKGROUND ART

Electronic devices, having generative artificial intelligence (Al) installed therein, may generate content requested by a user. Generative Al may generate similar content by using existing content. Generative AI may learn patterns of content and generate new content as an interference result.

Recently, various types of electronic devices that utilize neural network models to perform vision tasks have been developed. Furthermore, electronic devices, having generative artificial AI installed therein, may reproduce images according to conditions input by a user, or may generate videos from text or sentences input by a user.

### DISCLOSURE OF INVENTION

### SOLUTION TO PROBLEM

According to an embodiment of the disclosure, a method of performing video enhancement is provided. The method of performing video enhancement includes identifying a first image from among a plurality of images included in a first video, wherein the first image includes an anomaly. In addition, the method of performing video enhancement includes obtaining guide information corresponding to the anomaly from among a plurality of types of guide information. In addition, the method of performing video enhancement includes obtaining a second image to replace the first image based on the guide information. In addition, the method of performing video enhancement includes obtaining a second video in which the anomaly has been removed by using the second image.

According to an embodiment of the disclosure, a device for performing video enhancement is provided. The device for performing video enhancement includes at least one memory storing one or more instructions; and at least one processor configured to execute the one or more instructions. The one or more instructions, when executed by the at least one processor, are configured to cause the device to identify a first image, from among a plurality of images included in a first video, wherein the first image includes an anomaly. In addition, the one or more instructions, when executed by the at least one processor, are configured to cause the device to obtain guide information corresponding to the anomaly from among a plurality of types of guide information. In addition, the one or more instructions, when executed by the at least one processor, are configured to cause the device to obtain a second image to replace the first image based on the guide information. In addition, the one or more instructions, when executed by the at least one processor, are configured to cause the device to obtain a second video in which the anomaly has been removed by using the second image.

According to an embodiment of the disclosure, a computer readable medium having instructions stored therein, which when executed by at least one processor cause the at least one processor to execute a method of performing video enhancement, is provided. The method includes identifying a first image from among a plurality of images included in a first video, wherein the first image includes an anomaly. In addition, the method includes obtaining guide information corresponding to the anomaly from among a plurality of types of guide information. In addition, the method includes obtaining a second image to replace the first image based on the guide information. In addition, the method includes obtaining a second video in which the anomaly has been removed by using the second image.

### BRIEF DESCRIPTION OF DRAWINGS

The above and other aspects and features of certain embodiments of the present disclosure will be more apparent from the following description taken in conjunction with the accompanying drawings, in which:
FIG. 1 illustrates an image in which an anomaly has been detected and an image from which an anomaly has been removed;
FIG. 2 is a flowchart for describing a method of performing video enhancement, according to an embodiment of the disclosure;
FIG. 3 is a flowchart for describing a process of determining a first image in which an anomaly has been detected in a first video including a plurality of images, according to an embodiment of the disclosure;
FIG. 4 is a diagram for describing a method of detecting a blur effect caused by steam, according to an embodiment of the disclosure;
FIG. 5 is a diagram for describing a method of detecting a color change caused by a lighting change, according to an embodiment of the disclosure;
FIG. 6 is a diagram for describing a method of detecting a shadow required to be removed, according to an embodiment of the disclosure;
FIG. 7 is a diagram for describing a method of detecting a reflection effect, according to an embodiment of the disclosure;
FIG. 8 is a diagram for describing an anomaly detection model according to an embodiment of the disclosure;
FIG. 9 is a flowchart for describing a process of obtaining guide information corresponding to an anomaly from among a plurality of types of guide information, according to an embodiment of the disclosure;
FIG. 10 is a flowchart for describing a process of generating a second image to replace a first image, based on the obtained guide information, according to an embodiment of the disclosure;
FIG. 11 is a diagram for describing an example of obtaining a second video on which video enhancement has been performed based on a guide image from a first video, in which an anomaly has been detected, according to an embodiment of the disclosure;
FIG. 12 is a block diagram illustrating an electronic device for performing video enhancement, according to an embodiment of the disclosure;
FIG. 13 is a block diagram for describing the configuration and operation of an electronic device for performing video enhancement, according to an embodiment of the disclosure; and
FIG. 14 is a block diagram for describing an operation of a guide information obtainment module according to an embodiment of the disclosure.

### MODE FOR THE INVENTION

The terms as used herein are briefly described and the disclosure is described in detail. Throughout the disclosure, the expression "at least one of a, b or c" indicates any of "only a", "only b", "only c", "both a and b", "both a and c", "both b and c", "all of a, b, and c", or any variations thereof.

As for the terms as used in the disclosure, common terms that are currently widely used are selected as much as possible while taking into account the functions in the disclosure. However, the terms may vary depending on the intention of those of ordinary skill in the art, precedents, the emergence of new technology, and the like. Also, in a particular case, there are also terms arbitrarily selected by the applicant. In this case, the meaning of the terms will be described in detail in the description of the disclosure. Therefore, the terms as used herein should be defined based on the meaning of the terms and the description throughout the disclosure rather than simply the names of the terms.

The singular forms as used herein are intended to include the plural forms as well unless the context clearly indicates otherwise. All terms including technical or scientific terms as used herein have the same meaning as commonly understood by those of ordinary skill in the art. It will be understood that although the terms "first," "second," etc. may be used to describe various elements, these elements should not be limited by these terms. These terms are only used to distinguish one element from another.

Throughout the specification, the expression "a portion includes a certain element" means that the portion may further include other elements rather than exclude other elements unless otherwise stated. Also, the terms such as "...er/or" and "module" described in the specification mean units that process at least one function or operation, and may be implemented as hardware, software, or a combination of hardware and software.

The functions related to artificial intelligence (AI) according to the disclosure are operated through a processor and a memory. The processor may be implemented as one or more processors. At this time, the one or more processors may be a general-purpose processor, such as a central processing unit (CPU), an application processor (AP), or a digital signal processor (DSP), a dedicated graphics processor, such as a graphics processing unit (GPU) or a vision processing unit (VPU), or a dedicated AI processor, such as a neural processing unit (NPU). The one or more processors may perform control to process input data according to an AI model or a predefined operation rule stored in the memory. Alternatively, when the one or more processors are dedicated Al processors, the dedicated AI processors may be designed with a hardware structure specialized for processing a specific Al model.

The AI model and the predefined operation rule are made through learning. The phase "being made through learning" means that the Al model or the predefined operation rule configured to perform desired characteristics (or purpose) is made in such a manner that a basic Al model is trained by using a large number of training data by a learning algorithm. The learning may be accomplished in a device itself that performs Al according to the disclosure, or may be accomplished through a separate server and/or system. Examples of the learning algorithm include supervised learning, unsupervised learning, semi-supervised learning, or reinforcement learning, but the disclosure is not limited to the examples described above.

The Al model may include a plurality of neural network layers. Each of the neural network layers has a plurality of weight values and performs neural network operations through operations between the plurality of weight values and the operation results of the previous layer. The weight values of the neural network layers may be optimized by the learning result of the AI model. For example, the weight values may be updated so that a loss value or a cost value obtained by the AI model during a learning process is reduced or minimized. An artificial neural network may include a deep neural network (DNN), for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or deep Q-networks, etc., but the disclosure is not limited to the examples described above.

Hereinafter, one or more embodiments of the disclosure will be described in detail with reference to the accompanying drawings, so that those of ordinary skill in the art may carry out the disclosure. However, the disclosure may be implemented in various different forms and is not limited to the embodiments described herein.

Hereinafter, the disclosure is described in detail with reference to the accompanying drawings.

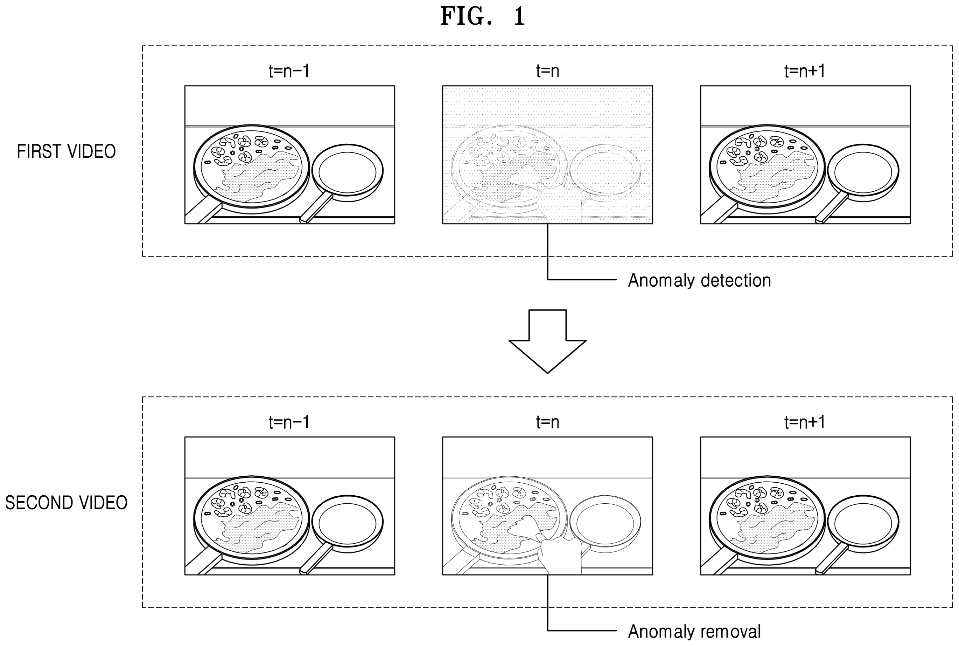

FIG. 1 illustrates an image in which an anomaly has been detected and an image from which an anomaly has been removed.

In the disclosure, a video includes a plurality of images. The video may be a continuously captured moving image or a set of intermittently captured still images. The video may include consecutive images. For example, the video may be images captured continuously with zero shutter lag or may be images recorded together within a certain time before and after the moment a photograph is captured by pressing a shutter. The image may be a frame of a video or a still image such as a photograph. The image may be at least one photograph or still image selected from among a plurality of images included in the video.

Referring to FIG. 1, a first video may include a plurality of images captured at different times. For example, the first video may be a cooking video in which a cooking action or a cooking process for making food is continuously captured, as illustrated in FIG. 1. For convenience of explanation, the description is given on the assumption that the first video is a cooking video, but the video in the disclosure is not limited thereto.

A video including images obtained by continuously or intermittently photographing the same object forms a sense of unity in the colors or tones of the images or the shapes of the objects within the images. A user may recognize the objects in the video as the same object without feeling discomfort or heterogeneity due to the sense of unity felt within the video.

Referring to FIG. 1, in an image corresponding to a frame at a time point n of the first video, it is difficult to determine cooking utensils or food being cooked in the image due to steam generated during a cooking process. In the image corresponding to the frame at the time point n, objects appear blurry and the image quality is degraded, and thus, the sense of unity with adjacent images corresponding to frames before and after the time point n is reduced. Accordingly, the user may recognize that the first video does not continue naturally. The user may recognize that there is an anomaly in the image corresponding to the frame at the time point n.

In the disclosure, the anomaly may be due to factors caused by the object in the image, a change in capturing environment, factors caused by other objects outside the image, and the like. For example, the anomaly may be due to steam generated from food, a lighting change when capturing an image, shadows on objects unrelated to the content of the video, the appearance of other objects reflected on the surface of the object in the image, and the like.

In order for the images in the first video to be naturally connected to each other and in order for the user to have no difficulty in determining the objects in the first video, video enhancement may be performed on the image corresponding to the frame at the time point n of the first video. Video enhancement may be performed on the area corresponding to the anomaly within the image or on the entire image.

In the disclosure, video enhancement refers to a task of adjusting an original video so that objects included in the video may be more easily determined. For example, video enhancement may include a series of processes of modifying an original video so as to obtain information necessary for a certain purpose from the video. Video enhancement may be a process of removing an anomaly or noise included in the video. Video enhancement may include a process of improving image quality by correcting sharpness, contrast, color, etc., or adjusting brightness values.

In an embodiment of the disclosure, video enhancement may mean image enhancement for one image. Image enhancement may involve removing an anomaly or noise or improving image quality for one or more images stored in a certain storage space or storage path. For example, image enhancement may involve modifying one or more images selected by the user among images captured continuously with zero shutter lag. As another example, image enhancement may involve modifying one or more images selected by the user among images recorded together within a certain time before and after the moment a photograph is captured by pressing a shutter. Hereinafter, a method and device for performing video enhancement is described.

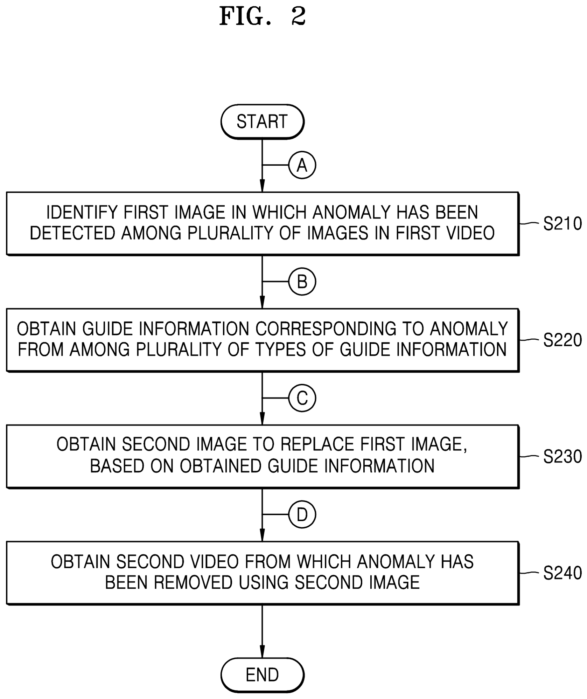

FIG. 2 is a flowchart for describing a method of performing video enhancement, according to an embodiment of the disclosure.

Referring to FIG. 2, in operation S210, a device for performing video enhancement may determine a first image in which an anomaly has been detected in a first video including a plurality of images. The device for performing video enhancement may be an electronic device including a camera that captures a video or may be an electronic device or a server that obtains a video from the outside. For example, the device for performing video enhancement may be a video processing device, such as a smartphone, smart glasses, a wearable device, a digital camera, a laptop, an augmented reality (AR) device, and a virtual reality (VR) device. The device for performing video enhancement may be provided with various types of neural network models. For example, the device for performing video enhancement may be provided with at least one model, such as a deep neural network (DNN), a convolution neural network (CNN), a recurrent neural network (RNN), and a bidirectional recurrent deep neural network (BRDNN), and such networks may be used in combination.

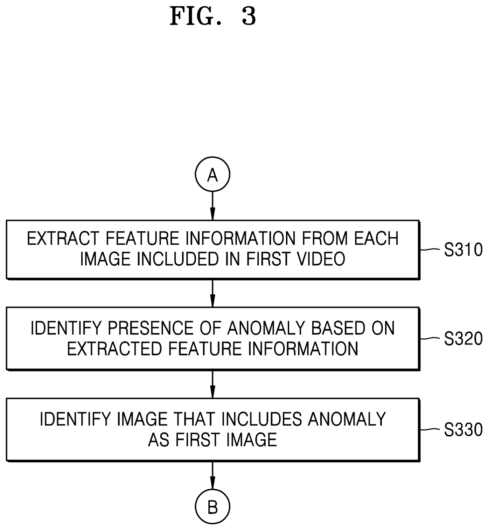

The first video including the images may be a video captured by the device for performing video enhancement or may be a video received from an external device. The device for performing video enhancement may analyze the images included in the first video, may determine whether an anomaly is detected, and may determine an image in which the anomaly has been detected. Hereinafter, a method of detecting an anomaly in a video including a plurality of images is described in detail with reference to FIGS. 3 to 8.

FIG. 3 is a flowchart for describing identifying a first image in which an anomaly has been detected in a first video including a plurality of images, according to an embodiment of the disclosure.

Referring to FIG. 3, in operation S310, the device for performing video enhancement may extract feature information from each of the images included in the first video. The device for performing video enhancement may extract information about at least one of components constituting the image (e.g., an edge, a color, etc.). The device for performing video enhancement may extract feature information of each of the images by using information about the components constituting the image. The feature information required to detect an anomaly may vary according to the type of the anomaly. The device for performing video enhancement may extract at least one piece of feature information so as to detect an anomaly.

In operation S320, the device for performing video enhancement may detect an anomaly based on the extracted feature information. The device for performing video enhancement may detect an anomaly in various ways according to the type of the anomaly.

The device for performing video enhancement may perform a certain operation of detecting an anomaly based on the extracted feature information. For example, the device for performing video enhancement may perform an operation of measuring edge intensity of each of the images. The device for performing video enhancement may perform an operation of obtaining a color distribution close to a specific value by using RGB color code of each of the images. The device for performing video enhancement may obtain an image histogram for each of the images and perform a certain operation so as to determine characteristics of the image.

The device for performing video enhancement may detect an anomaly by using an anomaly detection model using the extracted feature information as input. The anomaly detection model may be a model trained using a set of images with an anomaly to be detected and images without an anomaly to be detected. The anomaly detection model may receive the feature information extracted from the image as input and may output whether a specific type of anomaly is detected. The anomaly detection model may detect various types of anomalies based on the feature information extracted from the image and may classify the types of the detected anomalies.

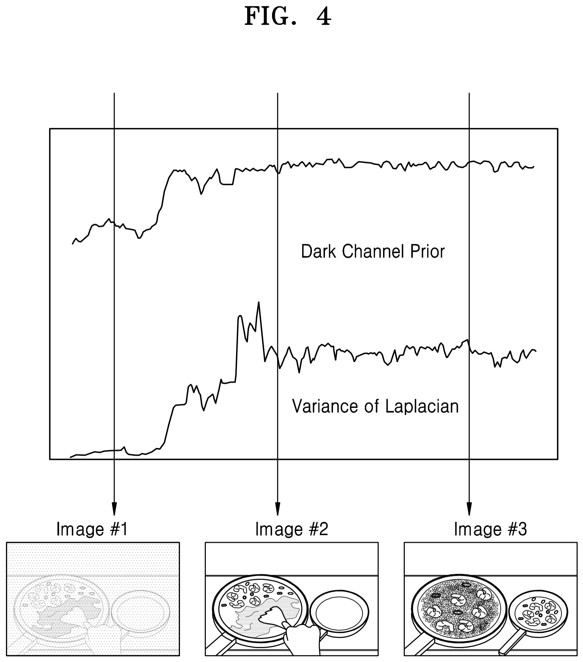

FIG. 4 is a diagram for describing a method of detecting a blur effect caused by steam, according to an embodiment of the disclosure.

FIG. 4 shows the result of performing a certain operation using dark channel prior and variance of Laplacian so as to detect an image in which a blur effect caused by steam has occurred. The dark channel prior analyzes R, G, and B channel values of each pixel in an image. The dark channel prior may measure the intensity of the blur effect caused by steam by using the statistical characteristics that at least one channel value converges to 0 in a non-deteriorated area. The area in which the blur effect caused by steam has occurred has a value close to (R, G, B)=(255, 255, 255). By using this, whether the blur effect caused by steam has occurred in the image may be determined. The variance of Laplacian may measure edge intensity within an image by performing Laplacian filtering, which is a second derivative, on the image. In the image in which the blur effect caused by steam has occurred, fewer edges are detected. By using this, whether the blur effect caused by steam has occurred in the image may be determined. However, the method of detecting the image in which the blur effect caused by steam has occurred is not limited thereto.

As illustrated in FIG. 4, as the result of performing a certain operation using dark channel prior and variance of Laplacian on three images, it is confirmed that a first image (image #1) in which the blur effect caused by steam has occurred has a lower value than a second image (image #2) and a third image (image #3) in which the blur effect caused by steam has not occurred.

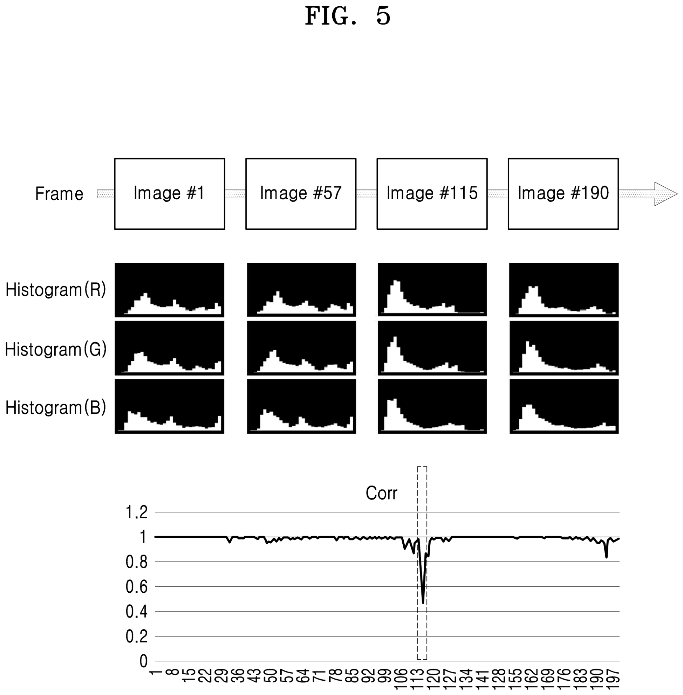

FIG. 5 is a diagram for describing a method of detecting a color change caused by a lighting change, according to an embodiment of the disclosure.

FIG. 5 shows the result of performing a certain operation using an image histogram for each image so as to detect an image in which a color change caused by a lighting change has occurred. The image histogram displays characteristics of the image by representing a value of an image pixel on a horizontal axis and the number of image pixels on a vertical axis. The image histogram is a graph that shows a distribution of the number of bright pixels and dark pixels in the image. However, the method of detecting an image in which a color change caused by a lighting change has occurred is not limited thereto.

For each of a plurality of images constituting a video, an image histogram may be obtained for each of R, G, and B channels and a histogram correlation value between adjacent frames may be obtained. The moment a lighting environment changes, the histogram correlation value between adjacent frames momentarily decreases. As illustrated in FIG. 5, because a histogram correlation value of image #115 momentarily decreased, it may be confirmed that a color change caused by a lighting change has occurred in a 115^{th} frame constituting a video.

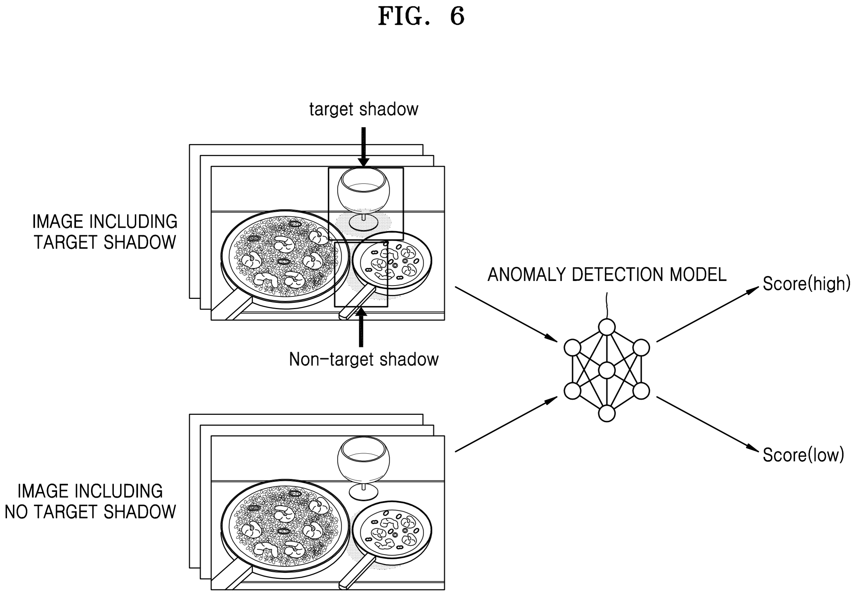

FIG. 6 is a diagram for describing a method of detecting a shadow required to be removed, according to an embodiment of the disclosure.

Due to an object and lighting that illuminates the object, a shadow may appear on the object and the shadow of the object may be expressed along with the object within an image. When all shadows in the image are removed, the image may become unnatural because the objects within the image may be recognized as if being copied and pasted. Therefore, it is necessary to selectively remove only the shadow required to be removed as an anomaly within the image.

The shadow required to be removed as an anomaly within the image may be located at the edge of the image and may change frequently. An object located at an edge of an image or a shadow thereof is likely to be of low importance within the image. A shadow that appears during a short period of time and then disappears within an image may be caused by external factors, such as lighting, or other objects.

In order to detect a shadow required to be removed as an anomaly, the device for performing video enhancement may find all shadow areas in the image through shadow segmentation and may distinguish between shadow areas required to be removed and shadow areas not required to be removed by using an algorithm or a neural network that is capable of measuring the degree of change or movement of the shadow. When the shadow area required to be removed is present in the image, the device for performing video enhancement may determine that the shadow required to be removed as an anomaly has been detected.

As illustrated in FIG. 6, the device for performing video enhancement may use an anomaly detection model to detect a shadow required to be removed as an anomaly. The shadow required to be removed as an anomaly is located at the edge of the image and changes frequently. This shadow corresponds to a target shadow. On the other hand, the shadow not required to be removed is located in the central portion of the image and occurs continuously within the image. This shadow corresponds to a non-target shadow. The anomaly detection model may be a model trained by using a set of an image including a shadow required to be removed as an anomaly, that is, a target shadow, and an image including no target shadow. The anomaly detection model may be trained by giving a high score to the image including the target shadow and giving a low score to the image including no target shadow. The anomaly detection model may receive feature information extracted from the image as input and may output whether the shadow required to be removed as an anomaly is detected in the image.

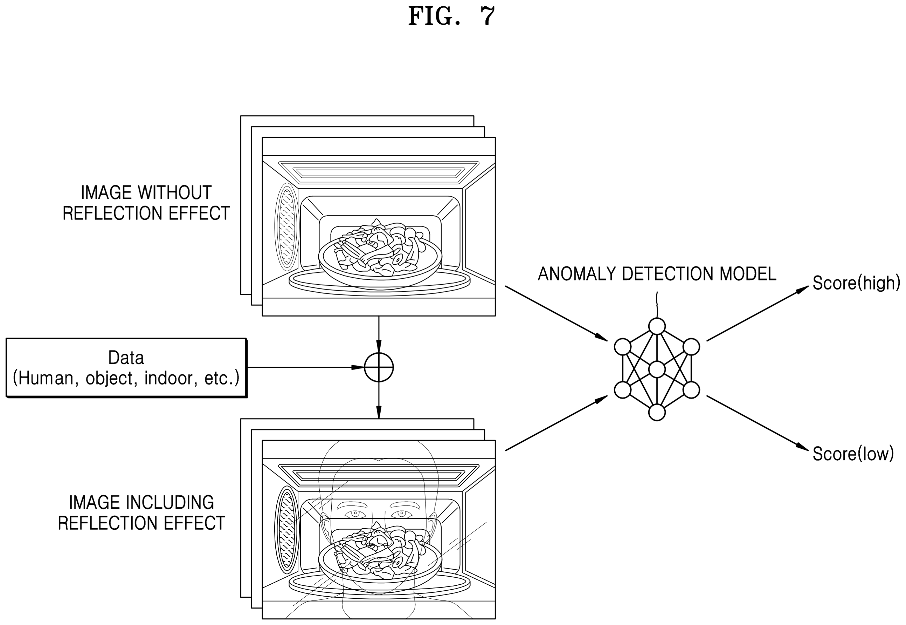

FIG. 7 is a diagram for describing a method of detecting a reflection effect, according to an embodiment of the disclosure.

When a surface of an object to be photographed is made of a material such as glass, or when a glass window is present between a camera and an object, a reflection effect may be expressed in the captured image. That is, an image of another object reflected from the surface of the object or the glass window may overlap the captured image. For example, when capturing a cooking video inside an oven, an image of a photographer or other objects may be reflected on a glass oven door.

As illustrated in FIG. 7, the device for performing video enhancement may use an anomaly detection model to detect a reflection effect required to be removed as an anomaly. The anomaly detection model may be a model trained by using a set of an image including a reflection effect required to be removed as an anomaly and an image including no reflection effect. The image including the reflection effect may be a captured image in which an image of a photographer or other objects is reflected, or an image in which an image of a person or other objects is combined with an image including no reflection effect. The anomaly detection model may be trained by giving a high score to the image including the reflection effect and giving a low score to the image including no reflection effect. The anomaly detection model may receive feature information extracted from the image as input and may output whether the reflection effect required to be removed as an anomaly is detected in the image.

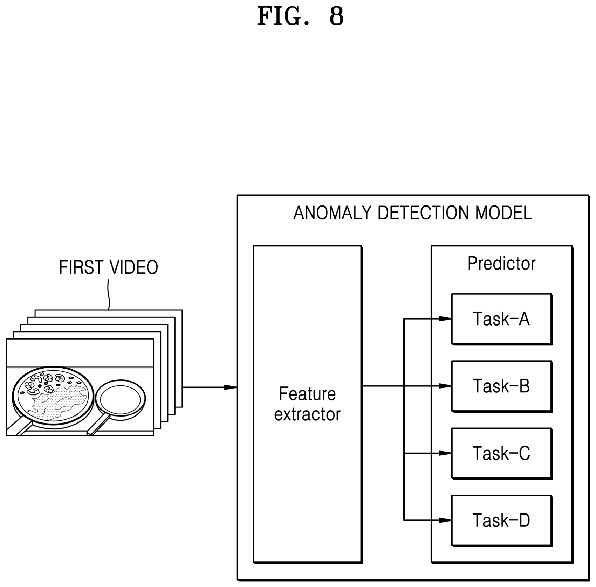

FIG. 8 is a diagram for describing the anomaly detection model according to an embodiment of the disclosure.

A device for performing video enhancement may detect an anomaly by using an anomaly detection model using feature information extracted from an image as input. The anomaly detection model may detect at least one anomaly based on the feature information extracted from the image and may classify the type of the detected anomaly. The device for performing video enhancement may use the anomaly detection model to obtain information about the image in which the anomaly has been detected, the type of the anomaly, the area in which the anomaly has been detected, etc.

As illustrated in FIG. 8, the anomaly detection model may be in the form of a multi-task model. The multi-task model may be in the form of a neural network including a plurality of layers. The multi-task model may include shared backbone layers and additional layers for each task which receive the outputs of shared backbones as input. The multi-task model may include a feature extractor that extracts feature information and a predictor that detects an anomaly by using the extracted feature information. For example, the anomaly detection model may be a multi-task model in which a prediction head for each type of anomaly is connected to the feature extractor that extracts feature information from an image, as illustrated in FIG. 8.

The feature extractor may extract information about components constituting the image from each of a plurality of images included in a first video. For example, the feature extractor may extract information about an edge of each image. The feature extractor may extract information about a color of each image. The feature extractor may extract information about brightness or contrast of each image. The feature extractor may include an image encoder.

The predictor includes a plurality of prediction heads, and each of the prediction heads may perform a task of detecting different types of anomalies. Each of the prediction heads may be in the form of a calculator that performs a certain operation or a neural network including layers. For example, in FIG. 8, task-A may be a task of detecting a blur effect caused by steam. Task-B may be a task of detecting a color change caused by a lighting change. Task-C may be a task of detecting a shadow required to be removed. Task-D may be a task of detecting a reflection effect.

Referring again to FIG. 3, in operation S330, the device for performing video enhancement may select a first image in which an anomaly has been detected in a first video. The device for performing video enhancement may select the first image from among the images constituting the first video by generating information about the anomaly detected from the first image. For example, the device for performing video enhancement may generate information about the image in which the anomaly has been detected, information identifying the type of the anomaly, information about the area in which the anomaly has been detected, etc.

Referring again to FIG. 2, in operation S220, the device for performing video enhancement may obtain guide information corresponding to the anomaly from among a plurality of types of guide information. The guide information may be a guide image, a guide mask, a guide feature, or a combination of two or more thereof. The type of the guide information necessary to perform video enhancement may vary according to the type of the anomaly.

The device for performing video enhancement may generate first guide information according to the type of the anomaly from among the guide image, the guide mask, and the guide feature. The guide image may be information about at least one image that may be used as a reference for video enhancement of the first image. The guide mask may be information that identifies a specific object or a specific area within an image. The guide feature may be information that informs the feature of an image or an object within an image.

The device for performing video enhancement may determine whether the generated first guide information is valid. For example, when the guide information is not actually generated or when guide information without any information is generated, the device for performing video enhancement may determine that the generated first guide information is invalid. When the guide information is not within a certain valid range, the device for performing video enhancement may determine that the generated first guide information is invalid.

The device for performing video enhancement may determine, as the guide information, the generated first guide information or second guide information that is different from the generated first guide information, based on the result of determining whether the generated first guide information is valid. When the generated first guide information is valid, the device for performing video enhancement may determine the generated first guide information as the guide information. When the generated first guide information is valid, the device for performing video enhancement may further determine whether additional guide information is necessary. When the additional guide information is not necessary, the device for performing video enhancement may determine the generated first guide information as the guide information. When the additional guide information is necessary, the device for performing video enhancement may change a guide information generating method, may generate second guide information, and may determine the generated first guide information and the generated second guide information as the guide information. When the generated first guide information is invalid, the device for performing video enhancement may change a guide information generating method, may generate second guide information, and may determine the generated second guide information as the guide information.

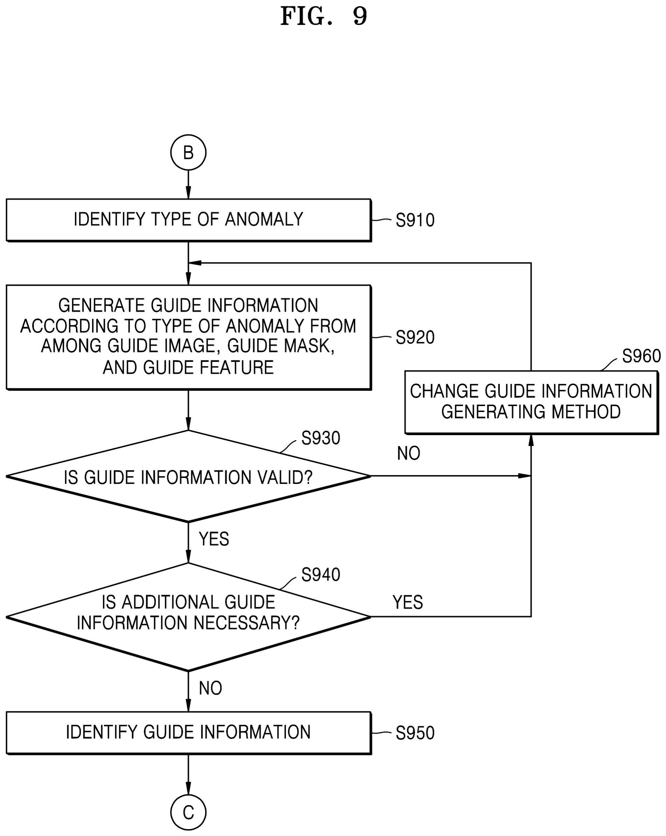

FIG. 9 is a flowchart for describing a process of obtaining guide information corresponding to an anomaly from among a plurality of types of guide information, according to an embodiment of the disclosure.

In operation S910, the device for performing video enhancement may identify a type of anomaly detected in a first image. This is because the type of guide information to be generated is determined according to the type of anomaly.

In operation S920, the device for performing video enhancement may generate guide information according to the type of the anomaly from among a guide image, a guide mask, and a guide feature. For example, when the anomaly is a blur effect caused by steam, the device for performing video enhancement may generate guide information in the type of the guide image. When the anomaly is a color change caused by a lighting change, the device for performing video enhancement may generate guide information in the type of the guide feature. When the anomaly is an occurrence of a shadow required to be removed, the device for performing video enhancement may generate guide information in the type of the guide mask. When the anomaly is a reflection effect, the device for performing video enhancement may generate guide information in the type of the guide image and the type of the guide mask.

In operation S930, the device for performing video enhancement may determine whether the generated guide information is valid. For example, when the guide information is not actually generated, when guide information without any information is generated, or when the guide information is not within a certain valid range, the device for performing video enhancement may determine that the generated guide information is invalid.

In operation S940, when the generated guide information is valid, the device for performing video enhancement may determine whether additional guide information is necessary. For example, in order to remove or improve the anomaly, the device for performing video enhancement may determine whether more guide information is necessary, based on the type of the anomaly.

In operation S950, when the device performing video enhancement determines that the generated guide information is valid and that more additional guide information is not necessary, the device for performing video enhancement may determine guide information.

In operation S960, when the device for performing video enhancement determines that the generated guide information is invalid or that additional guide information is necessary even when the generated guide information is valid, the device for performing video enhancement may change a guide information generating method and may generate other guide information.

An embodiment of the disclosure in which guide information is obtained for each type of anomaly is described below with reference to specific examples. Some of the processes of obtaining guide information, illustrated in FIG. 9, may be omitted according to each type of anomaly.

When the anomaly is a blur effect caused by steam, the device for performing video enhancement may obtain, as a first guide image, an image that is most similar to the first image in which the blur effect caused by steam has been detected in terms of a shape and outline of an object within an image, from among images, in which the blur effect caused by steam has not been detected, from the first video. When the blur effect caused by steam occurs, the loss of color information of the image is significant, but edges may be extracted to the extent that the shape and outline of the object within the image are determined. The device for performing video enhancement may determine whether the first guide image is valid, based on a similarity between the first guide image and the first image. Based on the result of the determining, the device for performing video enhancement may identify the first guide image as the guide information or may identify, as the guide information, a guide mask that performs segmentation on an object within the first image, a guide feature including a color map of an object, and a second guide image without an object. When generating the guide feature such as the color map of the object, the guide mask that has performed segmentation corresponding to the object may be used.

When the anomaly is a color change caused by a lighting change, the device for performing video enhancement may generate a first guide feature based on most frequent color information from among pieces of color information extracted from each of the images included in the first video. The device for performing video enhancement may extract color information of each image, may cluster pieces of similar color information together, and may generate a first guide feature based on representative color information of the largest cluster. The device for performing video enhancement may determine whether the generated first guide feature is within a certain range. Based on the result of the determining, the device for performing video enhancement may determine the generated first guide feature as the guide information or may determine, as the guide information, a second guide feature based on a color range specified by a user. Alternatively, when the device for performing video enhancement determines that the first guide feature is not within the certain range, the device for performing video enhancement may determine the second guide feature as the guide information, based on most frequent color information from among pieces of color information extracted from each of the adjacent images within the certain range from the first image in which the color change caused by the lighting change has been detected.

When the anomaly is an occurrence of a shadow required to be removed, the device for performing video enhancement may generate a first guide mask corresponding to each shadow area in the first image in which the shadow required to be removed has been detected. When a plurality of guide masks are generated according to a plurality of shadow areas, a first guide mask may be generated by fusing the guide masks. The device for performing video enhancement may determine whether the first guide mask is valid, based on the range and position of the generated first guide mask. Based on the result of the determining, the device for performing video enhancement may determine the generated first guide mask as the guide information or may determine, as the guide information, the second guide mask generated by changing a mask generation model. The device for performing video enhancement may generate an image with no or smallest shadow area in the first video as the guide image by using, as additional guide information, information about the entire shadow area and the target shadow and non-target shadow areas within the image generated in the process of generating the first guide mask, and may use the generated image to prevent unnecessary shadow removal.

When the anomaly is a reflection effect, the device for performing video enhancement may generate, as the first guide image, an image that is most similar to the first image in which the reflection effect has been detected, from among images, in which the reflection effect has not been detected, included in the first video, and may generate a first guide mask corresponding to an area with the reflection effect in the first image. The device for performing video enhancement may determine whether the first guide mask is valid, based on whether the first guide mask is for a portion in which reflection does not occur from an object in the first image. When the first guide mask is generated even though the surface of the object within the first image includes a material that does not cause reflection, the device for performing video enhancement may determine that the generated first guide mask is invalid. Based on the result of the determining, the device for performing video enhancement may determine the first guide mask and the first guide image as the guide information or may determine, as the guide information, the generated first guide image and a second guide mask generated by changing a mask generation model.

Referring again to FIG. 2, in operation S230, the device for performing video enhancement may generate a second image to replace the first image, based on the obtained guide information. The device for performing video enhancement may generate the second image from the first image, based on the guide information, or may generate the second image by combining the guide information.

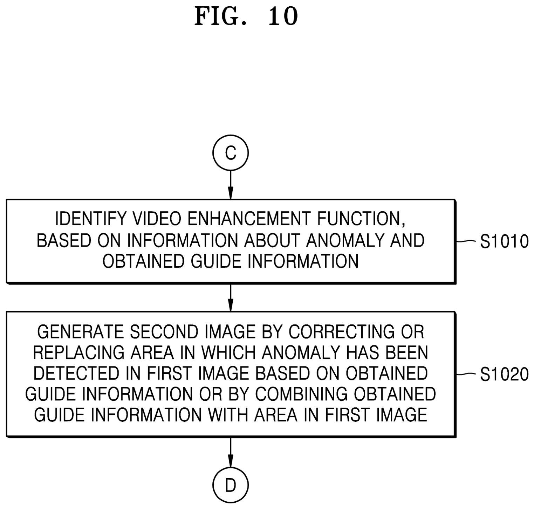

FIG. 10 is a flowchart for describing a process of generating the second image to replace the first image, based on the obtained guide information, according to an embodiment of the disclosure.

In operation S1010, the device for performing video enhancement may determine a video enhancement function to be performed, based on information about the anomaly and the obtained guide information. The information about the anomaly may include information about the image in which the anomaly has been detected, information identifying the type of the anomaly, and information about the area in which the anomaly has been detected, but the disclosure is not limited thereto.

In operation S1020, the device for performing video enhancement may correct or replace the area in which the anomaly has been detected in the first image, based on the obtained guide information, or may generate the second image by combining the obtained guide information. For example, the device for performing video enhancement may generate the second image by correcting at least one of the color, the color feature, or the sharpness of the area in which the anomaly has been detected in the first image, based on the obtained guide information. The device for performing video enhancement may extract, from the obtained guide information, an area corresponding to the area in which the anomaly has been detected in the first image, and may generate the second image by replacing the area in which the anomaly has been detected with the extracted area. The device for performing video enhancement may use the guide information to remove the area in which the anomaly has been detected in the first image. The device for performing video enhancement may generate the second image by combining the obtained guide information with the area in first image.

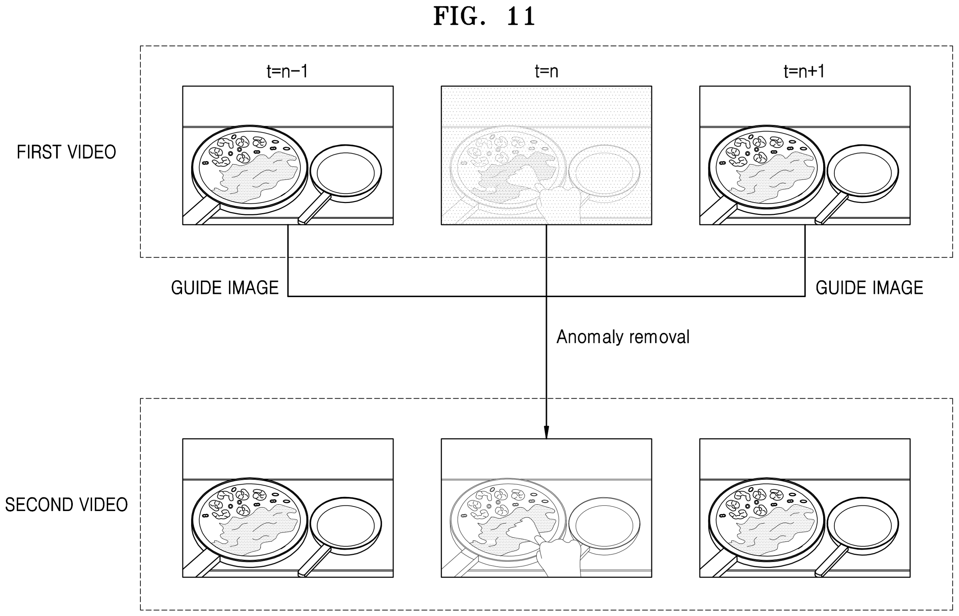

FIG. 11 is a diagram for describing an example of obtaining a second video on which video enhancement has been performed based on a guide image from a first video in which an anomaly has been detected, according to an embodiment of the disclosure.

Referring to FIG. 11, the device for performing video enhancement may detect a blur effect caused by steam in a first image corresponding to a frame at time point n in a first video. In order for images in the first video to be naturally connected to each other and in order for the user to have no difficulty in determining the objects in the first video, the device for performing video enhancement may perform video enhancement on the first image corresponding to the frame at the time point n of the first video. The device for performing video enhancement may perform video enhancement on the entire first image or an area corresponding to the blur effect caused by steam within the first image. For example, the device for performing video enhancement may extract, from the obtained guide image, the area corresponding to the blur effect caused by steam, and may generate the second image by replacing the area corresponding to the blur effect within the first image with the extracted area. Alternatively, the device for performing video enhancement may generate the second image by combining the obtained guide image. The device for performing video enhancement may obtain the second video, on which video enhancement has been performed, by replacing the first image with the second image in the first video.

Referring again to FIG. 2, in operation S240, the device for performing video enhancement may use the second image to obtain the second video from which the anomaly has been removed. The removal of the anomaly includes not only a case where the anomaly is completely removed, but also a case where the anomaly is diluted or the degree of anomaly s reduced. The device for performing video enhancement may obtain the second video by replacing the first image with the second image in the first video.

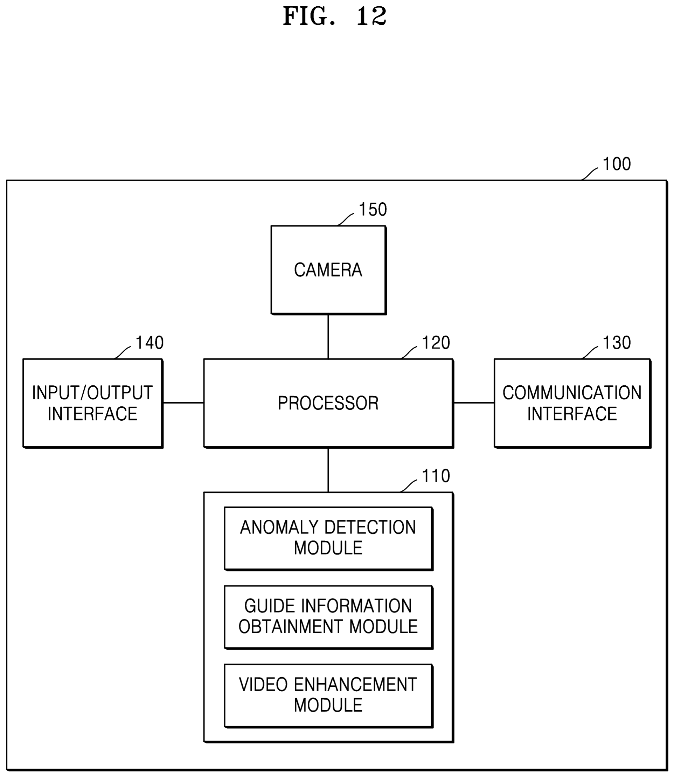

The device for performing video enhancement is a device capable of obtaining a video and processing the video by using an Al model, and may be in the form of a server or an electronic device 100 that is operable by a user. Hereinafter, the configuration and operation of the case where the device for performing video enhancement is the electronic device 100 is described with reference to FIGS. 12 to 14. Even when omitted below, the description of the method of performing video enhancement may also be applied to the electronic device 100 for performing video enhancement.

FIG. 12 is a block diagram illustrating the electronic device 100 for performing video enhancement, according to an embodiment of the disclosure.

Referring to FIG. 12, the electronic device 100 for performing video enhancement, according to an embodiment of the disclosure, may include a memory 110, a processor 120, a communication interface 130, an input/output interface 140, and a camera 150.

The memory 110 may store instructions, a data structure, and program code, which are readable by the processor 120. In an embodiment of the disclosure, operations performed by the processor 120 may be implemented by executing instructions or codes of a program stored in the memory 110.

The memory 110 may include flash memory-type memory, hard disk-type memory, multimedia card micro-type memory, or card-type memory (e.g., secure digital (SD) or extreme digital (XD) memory), may include a non-volatile memory including at least one of read-only memory (ROM), electrically erasable programmable read-only memory (EEPROM), programmable read-only memory (PROM), magnetic memory, magnetic disc, or optical disc, and may include a volatile memory, such as random access memory (RAM) or static random access memory (SRAM).

The memory 110 according to an embodiment of the disclosure may store one or more instructions and/or programs that perform control such that the electronic device 100 for performing video enhancement processes an image. For example, the memory 110 may store an anomaly detection module, a guide information obtainment module, and a video enhancement module. When learning of an Al model is required within the electronic device 100 for performing video enhancement, a model learning module may be further mounted thereon.

The processor 120 may control the operations or functions performed by the electronic device 100 for performing video enhancement by executing the instructions or programmed software modules stored in the memory 110. The processor 120 may include hardware components that perform arithmetic, logic, and input/output operations and signal processing. The processor 120 may control overall operations of the electronic device 100 for performing video enhancement by executing one or more instructions stored in the memory 110.

The processor 120 may include, for example, at least one of CPUs, microprocessors, GPUs, application specific integrated circuits (ASICs), DSPs, digital signal processing devices (DSPDs), programmable logic devices (PLDs), field programmable gate arrays (FPGAs), APs, neural processing units, or dedicated AI processors designed with a hardware structure specialized for processing an AI model, but the disclosure is not limited thereto. Each processor constituting the processor 120 may be a dedicated processor for performing a certain function.

The communication interface 130 may perform wired or wireless communication with other devices or networks. The communication interface 130 may include a communication circuit or a communication module that supports at least one of various wired and wireless communication methods. For example, the communication interface 130 may perform data communication between the electronic device 100 for performing video enhancement and other devices by using at least one of data communication schemes including wired local area network (LAN), wireless LAN, Wireless Fidelity (Wi-Fi), Bluetooth, ZigBee, Wi-Fi Direct (WFD), Infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliance (WiGig), and radio frequency (RF) communication.

The communication interface 130 according to an embodiment of the disclosure may receive, from an external device, an Al model or an image used to perform video enhancement. For example, the communication interface 130 may receive, from the server, a database or an AI model trained in the server. The communication interface 130 may receive images from other electronic devices. The communication interface 130 may transmit, to the external device, the image generated by the electronic device 100 for performing video enhancement, so that the image is shared with another user or is displayed on the external device associated with the image.

The communication interface 130 according to an embodiment of the disclosure may transmit, to the server, the image obtained by the electronic device 100 for performing video enhancement or information about the image, or may receive the image from the server. For example, the communication interface 130 may transmit, to the server, an image captured by the electronic device 100 for performing video enhancement or an image received from another electronic device. The communication interface 130 may transmit, to the server, information about an image input through the input/output interface 140 of the electronic device 100 for performing video enhancement. The communication interface 130 may receive, from the server, an image stored in the server.

The input/output interface 140 may be provided in the form in which an output interface that provides information or images is included and an input interface that receives an input is further included. The output interface may include a display panel and a controller that controls the display panel, and may be implemented in various ways, for example, an organic light-emitting diode (OLED) display, an active-matrix organic light-emitting diode (AM-OLED) display, and a liquid crystal display (LCD). The input interface may receive various types of input from the user and may include at least one of a touch panel, a keypad, or a pen recognition panel. The input/output interface 140 may be provided in the form of a touch screen in which a display panel and a touch panel are combined with each other and may be implemented to be flexible or foldable.

The input/output interface 140 according to an embodiment of the disclosure may obtain information about an image from a user. The user may select a video, on which video enhancement is to be performed, from among a plurality of videos through the input/output interface 140. The input/output interface 140 may receive user input for information or control commands necessary in the process of performing video enhancement.

The camera 150 is a hardware module that captures an image. The camera 150 may capture an image. The camera 150 may include at least one camera module and may support functions such as depth of field, telephoto, wide angle, and ultra-wide angle, depending on the specifications of the electronic device 100 for performing video enhancement. Unless an image is directly captured by using the electronic device 100 for performing video enhancement, the camera 150 may be excluded from the electronic device 100 for performing video enhancement.

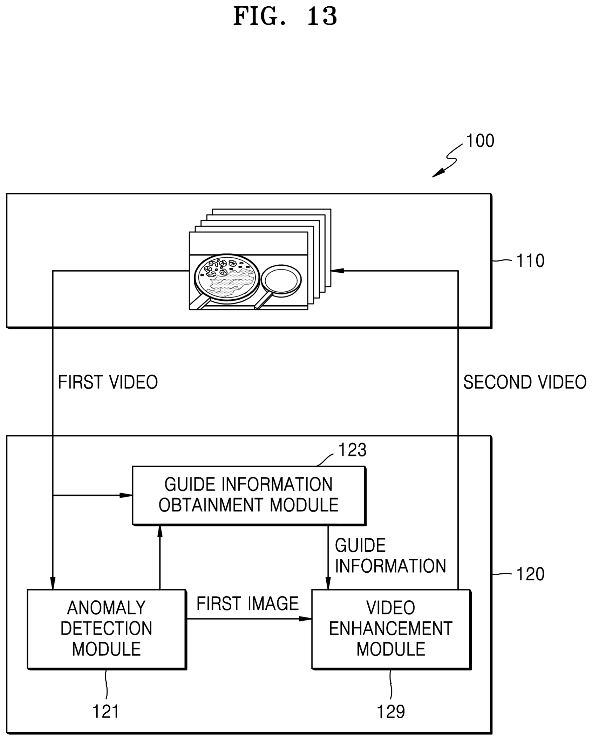

FIG. 13 is a block diagram for describing the configuration and operation of the electronic device 100 for performing video enhancement, according to an embodiment of the disclosure.

Referring to FIG. 13, the electronic device 100 for performing video enhancement may include a memory 110 that stores one or more instructions and a processor 120 that executes the one or more instructions stored in the memory 110. The processor 120 may load, from the memory 110, instructions or codes for an anomaly detection module 121, a guide information obtainment module 123, and a video enhancement module 129 and may execute the loaded instructions or codes.

The processor 120 may execute the one or more instructions to determine a first image in which an anomaly has been detected in a first video including a plurality of images. The processor 120 may receive the first video stored in the memory 110 and may perform a task of detecting an anomaly for each of the images included in the first video through the anomaly detection module 121. The processor 120 may extract feature information from each of the images included in the first video through the anomaly detection module 121, may detect the anomaly based on the extracted feature information, and may select the first image in which the anomaly has been detected in the first video. The processor 120 may perform a certain operation of detecting the anomaly based on the extracted feature information through the anomaly detection module 121 or may detect the anomaly by using the anomaly detection model that uses the extracted feature information as input.

The processor 120 may execute the one or more instructions to obtain guide information corresponding to the anomaly from among a plurality of types of guide information. The processor 120 may generate first guide information according to the type of anomaly from among a guide image, a guide mask, and a guide feature through the guide information obtainment module 123. The processor 120 may determine whether the first guide information generated through the guide information obtainment module 123 is valid. Based on the result of the determining, the processor 120 may determine, as the guide information, the generated first guide information or second guide information that is different from the generated first guide information.

When the first guide information generated through the guide information obtainment module 123 is valid, the processor 120 may determine the generated first guide information as the guide information. When the first guide information generated through the guide information obtainment module 123 is valid, the processor 120 may determine whether additional guide information is necessary. When the additional guide information is not necessary, the processor 120 may determine the generated first guide information as the guide information. When the first guide information generated through the guide information obtainment module 123 is valid and the additional guide information is necessary, the processor 120 may change a guide information generating method, may generate second guide information, and may determine the generated first guide information and the generated second guide information as the guide information. When the first guide information generated through the guide information obtainment module 123 is invalid, the processor 120 may change a guide information generating method, may generate second guide information, and may determine the generated second guide information as the guide information.

The processor 120 may execute the one or more instructions to generate a second image to replace the first image, based on the obtained guide information. The processor 120 may generate the second image from the first image through the video enhancement module 129, based on the guide information, or may generate the second image through the video enhancement module 129 by combining the guide information. The processor 120 may determine a video enhancement function to be performed through the video enhancement module 129, based on information about the anomaly and the obtained guide information. The information about the anomaly may include information about the image in which the anomaly has been detected, information identifying the type of anomaly, and information about the area in which the anomaly has been detected, but the disclosure is not limited thereto. The processor 120 may correct or replace the area in which the anomaly has been detected in the first image through the video enhancement module 129, based on the obtained guide information, or may generate the second image through the video enhancement module 129 by combining the obtained guide information.

The processor 120 may execute the one or more instructions to obtain the second video, in which the anomaly is removed, by using the second image. The processor 120 may replace the first image in the first video with the second image generated through the video enhancement module 129, may obtain the second video on which video enhancement has been performed, and may store the second video in the memory 110.

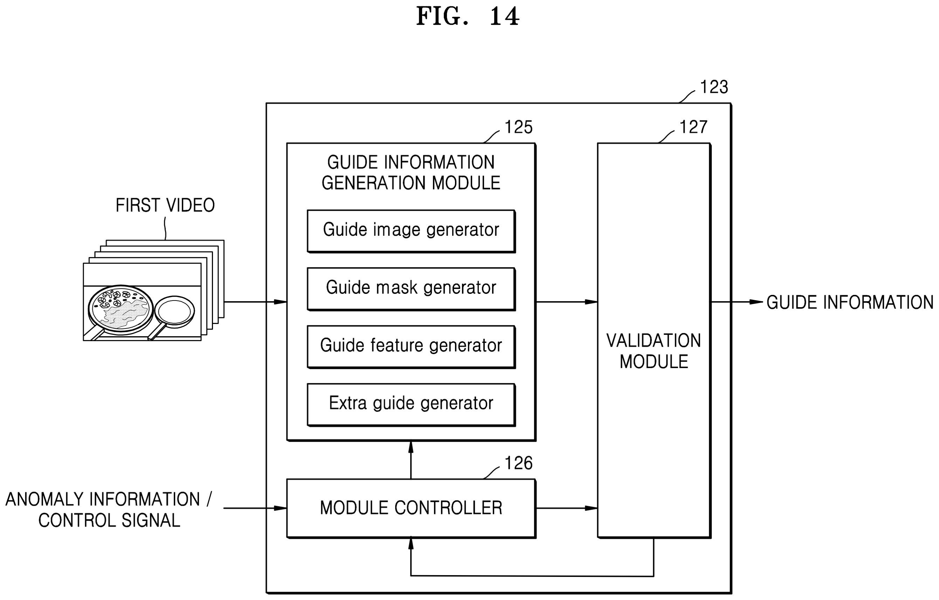

FIG. 14 is a block diagram for describing the operation of the guide information obtainment module 123 according to an embodiment of the disclosure.

Referring to FIG. 14, the guide information obtainment module 123 may include a guide information generation module 125, a module controller 126, and a validation module 127. The guide information obtainment module 123 may receive the first video stored in the memory 110. The guide information obtainment module 123 may receive information about an anomaly from the anomaly detection module 121 or may receive a control signal based on user input. The guide information obtainment module 123 may output the guide information to the video enhancement module 129.

The guide information generation module 125 may include a guide image generator, a guide mask generator, a guide feature generator, and an extra guide generator. The guide information generation module 125 may generate guide information corresponding to the detected anomaly for the first image in which the anomaly has been detected in the first video, based on a control signal output from the module controller 126. The module controller 126 may receive information about the anomaly, for example, information about the image in which the anomaly has been detected, information identifying the type of anomaly, or information about the area in which the anomaly has been detected. The module controller 126 may control the guide information generation module 125 to generate guide information corresponding to the detected anomaly for the first image in which the anomaly has been detected. The guide information generation module 125 may output the generated guide information to the validation module 127.

The guide information generation module 125 may generate guide information based on the type of the detected anomaly from among a plurality of types of guide information. For example, when the anomaly is a blur effect caused by steam, the guide information generation module 125 may generate a guide image through the guide image generator. The guide image generator may generate, as a first guide image, an image that is most similar to the first image in which the blur effect caused by steam has been detected, in terms of a shape and outline of an object within the image, from among the images, in which the blur effect caused by steam has not been detected, included in the first video. When the anomaly is a color change caused by a lighting change, the guide information generation module 125 may generate a guide feature through the guide feature generator. The guide feature generator may generate a first guide feature based on highest frequent color information from among pieces of color information extracted from each of the images included in the first video. When the anomaly is an occurrence of a shadow required to be removed, the guide information generation module 125 may generate a guide mask through the guide mask generator. The guide mask generator may generate a first guide mask corresponding to each shadow area in the first image in which a shadow required to be removed has been detected. When the anomaly is a reflection effect, the guide information generation module 125 may generate a guide image and a guide mask through the guide image generator and the guide mask generator. The guide image generator may generate, as a first guide image, an image that is most similar to the first image in which the reflection effect has been detected, from among the images, in which no reflection effect has been detected, included in the first video. The guide mask generator may generate a first guide mask corresponding to an area with the reflection effect in the first image.

The guide image generator, the guide mask generator, the guide feature generator, and the extra guide generator, which are included in the guide information generation module 125, may share the guide information generated by the guide image generator, the guide mask generator, the guide feature generator, and the extra guide generator. For example, the guide mask generated by the guide mask generator may be used when the guide image generator generates the guide image.

The validation module 127 may determine whether the guide information received from the guide information generation module 125 is valid. For example, when no guide information is actually generated, when guide information without any information is generated, or when the guide information is not within a certain valid range, the validation module 127 may determine that the generated guide information is invalid. The validation module 127 may output the result of the determining to the module controller 126.

When the guide information is valid, the module controller 126 may determine whether additional guide information is necessary. When the module controller 126 determines that the guide information is valid and the additional guide information is not necessary, the module controller 126 may control the guide information obtainment module 123 to output the generated guide information. When the module controller 126 determines that the guide information is invalid or that additional guide information is necessary even when the generated guide information is valid, the module controller 126 may changes a guide information generating method and may generate other guide information.

On the other hand, the embodiment of the disclosure may be implemented in the form of a computer-readable recording medium including computer-executable instructions, such as program modules executable by a computer. A computer-readable recording medium may be any available media that are accessible by the computer and may include any volatile and non-volatile media and any removable and non-removable media. In addition, the computer-readable recording medium may include a computer storage medium and a communication medium. The computer storage medium may include any volatile, non-volatile, removable, and non-removable media that are implemented in any method or technology for storage of information, such as computer-readable instructions, data structures, program modules, or other data. The communication medium may typically include computer-readable instructions, data structures, or other data of a modulated data signal, such as program modules.

Also, the computer-readable recording medium may be provided in the form of a non-transitory computer-readable recording medium. The non-transitory storage medium is a tangible device and only means not including a signal (e.g., electromagnetic wave). This term does not distinguish between a case where data is semi-permanently stored in a storage medium and a case where data is temporarily stored in a storage medium. For example, the non-transitory storage medium may include a buffer in which data is temporarily stored.

According to an embodiment of the disclosure, the methods according to various embodiments of the disclosure may be provided by being included in a computer program product. The computer program product may be traded between a seller and a buyer as commodities. The computer program product may be distributed in the form of a machine-readable storage medium (e.g., compact disc read-only memory (CD-ROM)), or may be distributed (e.g., downloaded or uploaded) online either via an application store or directly between two user devices (e.g., smartphones). In the case of the online distribution, at least a part of a computer program product (e.g., downloadable app) is stored at least temporarily on a machine-readable storage medium, such as a server of a manufacturer, a server of an application store, or a memory of a relay server, or may be temporarily generated.

According to an embodiment of the disclosure, a method of performing video enhancement is provided. The method of performing video enhancement may include identifying a first image from among a plurality of images included in a first video, wherein the first image includes an anomaly (S210). In addition, the method of performing video enhancement may include obtaining guide information corresponding to the anomaly from among a plurality of types of guide information (S220). In addition, the method of performing video enhancement may include obtaining a second image to replace the first image based on the guide information (S230). In addition, the method of performing video enhancement may include obtaining a second video in which the anomaly has been removed by using the second image (S240).

In addition, according to an embodiment of the disclosure, the obtaining of the guide information (S220) may include generating, based on a type of the anomaly, first guide information from among a guide image, a guide mask, and a guide feature (S910, S920). In addition, the obtaining of the guide information (S220) may include identifying whether the first guide information is valid (S930). In addition, the obtaining of the guide information (S220) may include, based on a result of identifying whether the first guide information is valid, identifying the first guide information as the guide information or identifying second guide information that is different from the first guide information as the guide information (S950).

In addition, the identifying as the guide information (S950) may include, based on identifying that the first guide information is valid, identifying whether additional guide information is necessary; based on identifying that the additional guide information is not necessary, identifying the first guide information as the guide information; and based on identifying that the additional guide information is necessary, changing a guide information generating method, generating the second guide information, and identifying the first guide information and the second guide information as the guide information.

In addition, the identifying as the guide information (S950) may further include, based on identifying that the first guide information is valid, identifying whether additional guide information is necessary (S940). In addition, the identifying as the guide information (S950) may further include, based on identifying that the additional guide information is not necessary, identifying the first guide information as the guide information, and based on identifying that the additional guide information is necessary, changing a guide information generating method, generating the second guide information, and identifying the first guide information and the second guide information as the guide information.

In addition, according to an embodiment of the disclosure, based on the anomaly including a blur effect caused by steam, the obtaining of the guide information (S220) may include obtaining a first guide image, from among the plurality of images, based on a comparison of the first image and one or more images, from among the plurality of images, in which the blur effect caused by steam is not detected, wherein the comparison of the first image and the one or more images is based on a comparison of a shape or an outline of an object included in the first image and in the one or more images. In addition, the obtaining of the guide information (S220) may include identifying whether the first guide image is valid based on a degree of similarity between the first guide image and the first image. In addition, the obtaining of the guide information (S220) may include, based on a result of the identifying whether the first guide image is valid, identifying the first guide image as the guide information, or identifying a guide mask configured to perform segmentation on the object within the first image, a guide feature including a color map of the object, and a second guide image without the object as the guide information.

In addition, according to an embodiment of the disclosure, based on the anomaly including a color change caused by a lighting change, the obtaining of the guide information (S220) may include generating a first guide feature based on color frequency information extracted from the plurality of images. In addition, the obtaining of the guide information (S220) may include identifying whether the first guide feature is within a certain range. In addition, the obtaining of the guide information (S220) may include, based on a result of the identifying whether the first guide feature is within the certain range, identifying, as the guide information, a second guide feature based on a color range specified by a user or the first guide feature.

In addition, according to an embodiment of the disclosure, based on the anomaly including a shadow area, the obtaining of the guide information (S220) may include generating a first guide mask corresponding to the shadow area. In addition, the obtaining of the guide information (S220) may include identifying whether the first guide mask is valid based on a range and a position of the first guide mask. In addition, the obtaining of the guide information (S220) may include, based on a result of the identifying whether the first guide mask is valid, identifying the first guide mask as the guide information, or identifying a second guide mask generated by changing a mask generation model as the guide information.

In addition, according to an embodiment of the disclosure, based on the anomaly including a reflection effect, the obtaining of the guide information (S220) may include obtaining a first guide image, from among the plurality of images, based on a comparison of the first image and one or more images, from among the plurality of images, in which the reflection effect has not been detected, wherein the comparison is based on a degree of similarity between the first image and the one or more images; generating a first guide mask corresponding to an area, in the first image, that includes the reflection effect. In addition, the obtaining of the guide information (S220) may include identifying whether the first guide mask is valid based on identifying whether the first guide mask corresponds to a portion, of the first image, in which reflection does not occur. In addition, the obtaining of the guide information (S220) may include, based on a result of identifying whether the first guide mask is valid, identifying the first guide mask and the first guide image as the guide information, or identifying a second guide mask generated by changing a mask generation model and the first guide image as the guide information.

In addition, according to an embodiment of the disclosure, the identifying of the first image (S210) may include extracting feature information from each of the plurality of images (S310). In addition, the determining of the first image (S210) may include identifying a presence of the anomaly in an image of the plurality of images based on the feature information (S320). In addition, the determining of the first image (S210) may include identifying the image that includes the anomaly as the first image (S330).

In addition, the identifying the presence of the anomaly (S320) may include performing a certain operation to detect the anomaly based on the feature information or using an anomaly detection model using the feature information as an input.

According to an embodiment of the disclosure, a device 100 for performing video enhancement is provided. The device 100 for performing video enhancement may include at least one memory 110 storing one or more instructions; and at least one processor 120 configured to execute the one or more instructions. In addition, the one or more instructions, when executed by the at least one processor 120, are configured to cause the device 100 to identify a first image, from among a plurality of images included in a first video, wherein the first image includes an anomaly. In addition, the one or more instructions, when executed by the at least one processor 120, are configured to cause the device 100 to obtain guide information corresponding to the anomaly from among a plurality of types of guide information. In addition, the one or more instructions, when executed by the at least one processor 120, are configured to cause the device 100 to obtain a second image to replace the first image based on the guide information. In addition, the one or more instructions, when executed by the at least one processor 120, are configured to cause the device 100 to obtain a second video in which the anomaly has been removed by using the second image.

In addition, according to an embodiment of the disclosure, the one or more instructions, when executed by the at least one processor 120, are configured to cause the device 100 to generate, based on a type of the anomaly, first guide information from among a guide image, a guide mask, and a guide feature. In addition, the one or more instructions, when executed by the at least one processor 120, are configured to cause the device 100 to identify whether the first guide information is valid, and identify, based on a result of identifying whether the first guide information is valid, either the first guide information or second guide information that is different from the first guide information as the guide information.

In addition, according to an embodiment of the disclosure, the one or more instructions, when executed by the at least one processor 120, are configured to cause the device 100 to, based on identifying that the first guide information is valid, identify the first guide information as the guide information. **In** addition, the one or more instructions, when executed by the at least one processor 120, are configured to cause the device 100 to, based on identifying that the first guide information is invalid, change a guide information generating method, generate the second guide information, and identify the second guide information as the guide information.

In addition, the one or more instructions, when executed by the at least one processor 120, are configured to cause the device 100 to, based on identifying that the first guide information is valid, identify whether additional guide information is necessary. In addition, the one or more instructions, when executed by the at least one processor 120, are configured to cause the device 100 to, based on identifying that the additional guide information is not necessary, identify the first guide information as the guide information. **In** addition, the one or more instructions, when executed by the at least one processor 120, are configured to cause the device 100 to, based on identifying that the additional guide information is necessary, change a guide information generating method, generate the second guide information, and identify the first guide information and the second guide information as the guide information.

In addition, according to an embodiment of the disclosure, the one or more instructions, when executed by the at least one processor 120, are configured to cause the device 100 to, based on the anomaly including a blur effect caused by steam, obtain a first guide image from among the plurality of images, based on a comparison of the first image and one or more images, from among the plurality of images, in which the blur effect caused by steam is not detected, wherein the comparison of the first image and the one or more images is based on a comparison of a shape or an outline of an object included in the first image and in the one or more images. In addition, the one or more instructions, when executed by the at least one processor 120, are configured to cause the device 100 to identify whether the first guide image is valid based on a degree of similarity between the first guide image and the first image. In addition, the one or more instructions, when executed by the at least one processor 120, are configured to cause the device 100 to, based on a result of identifying whether the first guide image is valid, identify the first guide image as the guide information, or identify a guide mask that performs segmentation on the object within the first image, a guide feature including a color map of the object, and a second guide image without the object as the guide information.

In addition, the one or more instructions, when executed by the at least one processor 120, are configured to cause the device 100 to, based on the anomaly including a color change caused by a lighting change, generate a first guide feature based on color frequency information extracted from the plurality of images. In addition, the one or more instructions, when executed by the at least one processor 120, are configured to cause the device 100 to identify whether the first guide feature is within a certain range. In addition, the one or more instructions, when executed by the at least one processor 120, are configured to cause the device 100 to, based on a result of identifying whether the first guide feature is within the certain range, identifying, as the guide information, a second guide feature based on a color range specified by a user or the first guide feature.

In addition, according to an embodiment of the disclosure, the one or more instructions, when executed by the at least one processor 120, are configured to cause the device 100 to, based on the anomaly including a shadow area, generate a first guide mask corresponding to the shadow area. **In** addition, the one or more instructions, when executed by the at least one processor 120, are configured to cause the device 100 to identify whether the first guide mask is valid based on a range and a position of the first guide mask. **In** addition, the one or more instructions, when executed by the at least one processor 120, are configured to cause the device 100 to, based on a result of identifying whether the first guide mask is valid, identify the first guide mask as the guide information, or identify a second guide mask generated by changing a mask generation model as the guide information.

In addition, according to an embodiment of the disclosure, the one or more instructions, when executed by the at least one processor 120, are configured to cause the device 100 to, based on the anomaly including a reflection effect, obtain a first guide image, from among the plurality of images, based on a comparison of the first image and one or more images, from among the plurality of images, in which the reflection effect has not been detected, wherein the comparison is based on a degree of similarity between the first image and the one or more images. In addition, the one or more instructions, when executed by the at least one processor 120, are configured to cause the device 100 to obtain a first guide mask corresponding to an area, in the first image, that includes the reflection effect. **In** addition, the one or more instructions, when executed by the at least one processor 120, are configured to cause the device 100 to identify whether the first guide mask is valid based on identifying whether the first guide mask corresponds to a portion, of the first image, in which reflection does not occur. In addition, the one or more instructions, when executed by the at least one processor 120, are configured to cause the device 100 to, based on a result of identifying whether the first guide mask is valid, identify the first guide mask and the first guide image as the guide information, or identify a second guide mask generated by changing a mask generation model, and the first guide image as the guide information.

In addition, according to an embodiment of the disclosure, the one or more instructions, when executed by the at least one processor 120, are configured to cause the device 100 to extract feature information from each of the plurality of images. In addition, the one or more instructions, when executed by the at least one processor 120, are configured to cause the device 100 to identify a presence of the anomaly in an image of the plurality of images based on the feature information, and identify the image that includes the anomaly as the first image.

According to an embodiment of the disclosure, a computer readable medium having instructions stored therein, which when executed by at least one processor cause the at least one processor to execute a method of performing video enhancement. The method may include identifying a first image from among a plurality of images included in a first video, wherein the first image includes an anomaly. In addition, the method may include obtaining guide information corresponding to the anomaly from among a plurality of types of guide information. In addition, the method may include obtaining a second image to replace the first image based on the guide information. In addition, the method may include obtaining a second video in which the anomaly has been removed by using the second image.

According to an embodiment of the disclosure, a method of performing video enhancement is provided. The method of performing video enhancement may include identifying a first image including an anomaly from among a plurality of images. In addition, the method may include identifying a type of the anomaly. In addition, the method may include generate first guide information based on the type of the anomaly using a first guide information generation method. In addition, the method may include, based on identifying that the first guide information is valid, generating a second image to replace the first image based on the first guide information. In addition, the method may include, based on identifying that the first guide information is invalid, generating second guide information using a second guide information generation method that is different from the first guide information generation method, and generating the second image to replace the first image based on the second guide information. In addition, the method may include obtaining a second video in which the anomaly has been removed by using the second image.

The foregoing description is for illustrative purposes only, and those of ordinary skill in the art to which the disclosure pertains will understand that modifications into other specific forms may be made thereto without changing the technical spirit or essential features of the disclosure. Therefore, it should be understood that the embodiments of the disclosure described above are illustrative in all aspects and are not restrictive. For example, the components described as being singular may be implemented in a distributed manner. Similarly, the components described as being distributed may be implemented in a combined form.

The scope of the disclosure is defined by the appended claims rather than the above detailed description, and all changes or modifications derived from the meaning and scope of the claims and equivalent concepts thereof should be construed as falling within the scope of the disclosure.

## Claims

1. A method of performing video enhancement, the method comprising:
identifying a first image from among a plurality of images included in a first video, wherein the first image comprises an anomaly (S210);
obtaining guide information corresponding to the anomaly from among a plurality of types of guide information (S220);
obtaining a second image to replace the first image based on the guide information (S230); and
obtaining a second video in which the anomaly has been removed by using the second image (S240).

2. The method of claim 1, wherein the obtaining guide information(S220) comprises:
generating, based on a type of the anomaly, first guide information from among a guide image, a guide mask, and a guide feature (S910, S920);
identifying whether the first guide information is valid (S930); and
based on a result of identifying whether the first guide information is valid, identifying the first guide information as the guide information or identifying second guide information that is different from the first guide information as the guide information (S950).

3. The method of claim 1 or 2, wherein the identifying as the guide information (S950) further comprises:
based on identifying that the first guide information is valid, identifying the first guide information as the guide information; and
based on identifying that the first guide information is invalid, changing a guide information generating method, generating the second guide information, and identifying the second guide information as the guide information.

4. The method of any one of claims 1 to 3,
wherein the identifying as the guide information (S950) further comprises:
based on identifying that the first guide information is valid, identifying whether additional guide information is necessary (S940);
based on identifying that the additional guide information is not necessary, identifying the first guide information as the guide information; and
based on identifying that the additional guide information is necessary, changing a guide information generating method, generating the second guide information, and identifying the first guide information and the second guide information as the guide information.

5. The method of any one of claims 1 to 4, wherein, based on the anomaly comprising a blur effect caused by steam, the obtaining guide information (S220) comprises:
obtaining a first guide image, from among the plurality of images, based on a comparison of the first image and one or more images, from among the plurality of images, in which the blur effect caused by steam is not detected, wherein the comparison of the first image and the one or more images is based on a comparison of a shape or an outline of an object included in the first image and in the one or more images;
identifying whether the first guide image is valid based on a degree of similarity between the first guide image and the first image; and
based on a result of the identifying whether the first guide image is valid, identifying the first guide image as the guide information, or identifying a guide mask configured to perform segmentation on the object within the first image, a guide feature comprising a color map of the object, and a second guide image without the object as the guide information.

6. The method of any one of claims 1 to 5, wherein, based on the anomaly comprising a color change caused by a lighting change, the obtaining guide information (S220) comprises:
generating a first guide feature based on color frequency information extracted from the plurality of images;
identifying whether the first guide feature is within a certain range; and
based on a result of the identifying whether the first guide feature is within the certain range, identifying, as the guide information, a second guide feature based on a color range specified by a user or the first guide feature.

7. The method of any one of claims 1 to 6, wherein, based on the anomaly comprising a shadow area, the obtaining guide information (S220) comprises:
generating a first guide mask corresponding to the shadow area;
identifying whether the first guide mask is valid based on a range and a position of the first guide mask; and
based on a result of the identifying whether the first guide mask is valid, identifying the first guide mask as the guide information, or identifying a second guide mask generated by changing a mask generation model as the guide information.

8. The method of any one of claims 1 to 7, wherein, based on the anomaly comprising a reflection effect, the obtaining guide information (S220) comprises:
obtaining a first guide image, from among the plurality of images, based on a comparison of the first image and one or more images, from among the plurality of images, in which the reflection effect has not been detected, wherein the comparison is based on a degree of similarity between the first image and the one or more images;
generating a first guide mask corresponding to an area, in the first image, that includes the reflection effect;
identifying whether the first guide mask is valid based on identifying whether the first guide mask corresponds to a portion, of the first image, in which reflection does not occur; and
based on a result of identifying whether the first guide mask is valid, identifying the first guide mask and the first guide image as the guide information, or identifying a second guide mask generated by changing a mask generation model and the first guide image as the guide information.

9. The method of any one of claims 1 to 8, wherein the identifying the first image (S210) comprises:
extracting feature information from each of the plurality of images (S310);
identifying a presence of the anomaly in an image of the plurality of images based on the feature information (S320); and
identifying the image that includes the anomaly as the first image (S330).

10. The method of any one of claims 1 to 9, wherein the identifying the presence of the anomaly (S320) comprises performing a certain operation to detect the anomaly based on the feature information or using an anomaly detection model using the feature information as an input.

11. A device (100) for performing video enhancement, the device comprising:
at least one memory (110) storing one or more instructions; and
at least one processor (120) configured to execute the one or more instructions, wherein the one or more instructions, when executed by the at least one processor (120), are configured to cause the device (100) to:
identify a first image, from among a plurality of images included in a first video, wherein the first image comprises an anomaly,
obtain guide information corresponding to the anomaly from among a plurality of types of guide information,
obtain a second image to replace the first image based on the guide information, and
obtain a second video in which the anomaly has been removed by using the second image.

12. The device (100) of claim 11, wherein the one or more instructions, when executed by the at least one processor (120), are further configured to cause the device (100) to:
generate, based on a type of the anomaly, first guide information from among a guide image, a guide mask, and a guide feature,
identify whether the first guide information is valid, and
identify, based on a result of identifying whether the first guide information is valid, either the first guide information or second guide information that is different from the first guide information as the guide information.

13. The device (100) of claim 11 or 12, wherein the one or more instructions, when executed by the at least one processor (120), are further configured to cause the device (100) to:
based on identifying that the first guide information is valid, identify the first guide information as the guide information, and
based on identifying that the first guide information is invalid, change a guide information generating method, generate the second guide information, and identify the second guide information as the guide information.

14. The device (100) of any one of claims 11 to 13, wherein the one or more instructions, when executed by the at least one processor (120), are further configured to cause the device (100) to:
extract feature information from each of the plurality of images;
identify a presence of the anomaly in an image of the plurality of images based on the feature information; and
identify the image that includes the anomaly as the first image.

15. A computer readable medium having instructions stored therein, which when executed by at least one processor cause the at least one processor to execute a method of performing video enhancement, the method comprising:
identifying a first image from among a plurality of images included in a first video, wherein the first image comprises an anomaly;
obtaining guide information corresponding to the anomaly from among a plurality of types of guide information;
obtaining a second image to replace the first image based on the guide information; and
obtaining a second video in which the anomaly has been removed by using the second image.
